# EUROPÄISCHE PATENTSCHRIFT

(11) **EP 1 327 758 B1**
(45) Veröffentlichungstag und Bekanntmachung des Hinweises auf die Patenterteilung: **10.07.2013**
(21) Anmeldenummer: 02025429.8
(22) Anmeldetag: 15.11.2002
(51) Int. Cl.: F02C 7/042, B64D 33/02, B64D 33/08

(54) **Lufteinlauf-Vorrichtung für ein Hilfstriebwerk in einem Flugzeug**
Air intake arrangement for an aircraft auxiliary power unit
Système d'aspiration d'air pour une unité de puissance auxiliaire d'un aéronef

(30) Priorität: 09.01.2002 DE 10200459
(43) Veröffentlichungstag der Anmeldung: 16.07.2003
(73) Patentinhaber: Airbus Operations GmbH, 21129 Hamburg (DE)
(72) Erfinder: Schnoor, Martin, Dipl.-Ing., 24568 Kaltenkirchen (DE)
(74) Vertreter: Landry, Felix

(56) Entgegenhaltungen:
- EP-A- 0 743 247
- EP-A- 0 968 918
- DE-A- 3 407 137
- US-A- 4 836 473
- US-B1- 6 264 137

## Beschreibung

Die Erfindung betrifft eine Lufteinlauf-Vorrichtung für Hilfstriebwerke in Flugzeugen zur Versorgung von Hilfsgeräten, die in einer Flugzeugkammer angeordnet sind, wobei zur Einleitung von Kühlluft eine Lufteinströmöffnung in der Flugzeugaußenhaut und ein Lufteinlauf für einen Hauptluftstrom vorgesehen sind und die Lufteinströmöffnung und der Lufteinlauf durch an der Flugzeugzelle beweglich gelagerte Elemente derart gesteuert werden, daß beide Öffnungen bei laufendem Hilfstriebwerk geöffnet und bei ausgeschaltetem Hilfstriebwerk verschlossen sind.

Eine derartige Lufteinlauf-Vorrichtung ist aus der DE-A-34 07 137 ersichtlich und für Hilfstriebwerke vorgesehen, welche beispielsweise im Heck von Verkehrsflugzeugen angeordnet sind und nur zeitweise arbeiten. Deshalb sind diese Lufteinlauf-Vorrichtungen auch mit Klappen verschließbar, die mit der Außenhaut der Flugzeugzelle bündig sind. Um eine Verbesserung der Strömungsverhältnisse zu erzielen, ist ein bezüglich der Flugzeugzelle beweglich angeordneter und in Strömungsrichtung vor dem Lufteinlauf befindlicher Grenzschichtabweiser vorgesehen. Dieser Grenzschichtabweiser wird in Abhängigkeit von der jeweiligen Stellung der Lufteinlaufklappe derart positioniert, daß bei geöffnetem Lufteinlauf der Grenzschichtabweiser sich außerhalb der Flugzeugzelle in Betriebsstellung befindet, während bei geschlossenem Lufteinlauf der Grenzschichtabweiser innerhalb der Außenkontur des Flugzeuges untergebracht ist.

Der Erfindung liegt die Aufgabe zugrunde, eine vereinfachte Kühlluftversorgung und -einleitung für eine Lufteinlauf-Vorrichtung im Flugzeug zu schaffen, durch den eine ausreichende Zuführung von Kühlluft zusätzlich zum Hauptluftstromes zu dem in einer Flugzeugkammer angeordneten Hilfstriebwerk für einen Betrieb am Boden oder während des Fluges sichergestellt ist.

Die Aufgabe wird erfindungsgemäß dadurch gelöst, daß die Lufteinströmöffnung und der Lufteinlauf über ein mechanisches wippenelement mit einer unterhalb der Lufteinströmöffnung angeordneten Drehachse durch beiderseits angeordnete Endteile über einen Verstellmotor steuerbar sind und bei ausgeschaltetem Hilfstriebwerk das dem Lufteinlauf benachbarte Endteil des wippenelementes den Lufteinlauf sowie das der Drehachse unmittelbar benachbarte andere Endteil des Wippenelementes die Lufteinströmöffnung verschließen und daß ein Luftrennblech außerhalb an der Flugzeugaußenhaut in benachbarter Lage zu dem Lufteinlauf und der Lufteinströmöffnung befestigt ist und mit seinem in Richtung der Öffnungen zeigenden Ende bei eingeschaltetem Hilfstriebwerk mit dem der Drehachse unmittelbar benachbarten Endteil des Wippenelementes zur Herstellung des in den Lufteinlauf strömenden Hauptluftstromes und des Kühlluftstromes für die Lufteinströmöffnung zusammenwirkt sowie bei ausgeschaltetem Hilfstriebwerk das Wippenelement die Flugzeugaußenhaut ergänzt.

Ausgestaltungen der Erfindung sind in den Unteransprüchen 2 bis 7 beschrieben.

Ein Vorteil der Erfindung besteht darin, daß eine bestehende Konfiguration eines Lufteinlaufes für ein Hilfstriebwerk nicht geändert werden muß. Durch den freien Bereich unter dem Lufttrennblech wird bei geschlossenem Wippenelement der Luftwiderstand an der Flugzeugaußenhaut vorteilhafterweise verringert. Weiterhin ist von Vorteil, daß der Staudruck während eines Fluges im Bereich der Kühlluftöffnung und damit die Kühlleistung erhöht wird, wodurch das Kühlsystem für das Hilfstriebwerk kleiner ausgelegt werden kann.

In der Zeichnung ist ein Ausführungsbeispiel nach der Erfindung schematisch dargestellt, und zwar zeigt:
- Fig. 1: ausschnittsweise einen Längsschnitt durch eine Flugzeugaußenhaut im Bereich eines Lufteinlaufes für ein Hilfstriebwerk, und
- Fig. 2: eine schematische Draufsicht auf die Flugzeugaussenhaut gemäß Fig. 1.

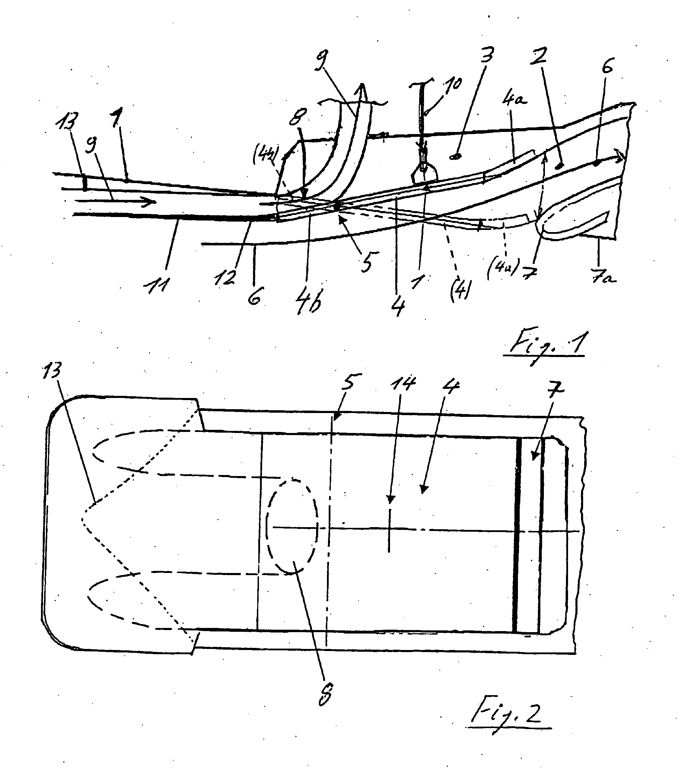

In Fig. 1 weist die mit 1 bezeichnete Flugzeugaußenhaut, von der nur ein kleiner Ausschnitt dargestellt ist, aufgrund des in ihr vorgesehenen, beispielsweise einen runden Querschnitt aufweisenden Lufteinlaufes 2 für ein, in einer Flugzeugkammer angeordnetes, zeichnerisch nicht dargestelltes Hilfstriebwerk eine dreidimensionale Ausnehmung 3 auf. In der Ausnehmung 3 ist ein als Verschlußklappe wirkendes mechanisches flächenförmiges Wippenelement 4 angeordnet, welches um eine Drehachse 5 an der Flugzeugaußenhaut 1 schwenkbar gelagert ist. Der Lufteinlauf 2, durch den der Hauptluftstrom 6 zum Hilfstriebwerk geführt ist, wird durch die Flugzeugaußenhaut 1 und durch eine Staunase 7 von z.B. kreisringförmigen Querschnitt begrenzt, die mit der Flugzeugwandung 7a in mechanischer Verbindung steht. Weiterhin weist die Flugzeugaußenhaut 1 in der Nähe der Ausnehmung 3 eine Lufteinströmöffnung 8 auf, die zur Zufuhr von zusätzlicher Kühlluft 9 für das Hilfstriebwerk dient. Hierzu kann die Kühlluft 9 durch einen nicht dargestellten Kanal zu einem Anschluß geführt sein, von dem die Kühlluft 9 entweder direkt oder über ein Rohr in die Flugzeugkammer für das Hilfstriebwerk gelangt.

Die Drehachse 5 des Wippenelementes 4 ist unterhalb der Lufteinströmöffnung 8 angeordnet, wobei das Wippenelement 4 von einem Verstellmotor mittels eines Antriebsgestänges 10 derart gesteuert wird, daß bei ausgeschaltetem Hilfstriebwerk das dem Lufteinlauf 2 benachbarte angewinkeltes Endteil 4a des Wippenelementes 4 den Lufteinlauf 2 sowie das der Drehachse 5 unmittelbar benachbarte andere Endteil 4b des Wippenelementes 4 die Lufteinströmöffnung 8 verschließen. Hierzu ist das Antriebsgestänge 10 in einem Bereich zwischen der Drehachse 5 des Wippenelementes 4 und der Staunase 7 des Luftteinlaufes 2 an dem Anlenkpunkt 14 des Wippenelementes 4 drehbeweglich befestigt.

Wie weiterhin aus den Figuren zu ersehen ist, befindet sich ein flächenförmiges, vorzugsweise der Flugzeugaußenhaut 1 in ihrer Form angepaßtes Lufttrennblech 11 außerhalb der Flugzeugaußenhaut 1 in benachbarter Lage zu dem Lufteinlauf 2 und der Lufteinströmöffnung 8. Die mechanische Befestigung des Lufttrennbleches 11 an der Flugzeugaußenhaut 1 erfolgt mittels mindestens einer aerodynamisch ausgeformten Stütze, die zeichnerisch nicht dargestellt ist. Das in Richtung der Öffnungen 2 und 8 zeigende Ende 12 des Lufttrennbleches 11 wirkt bei eingeschaltetem Hilfstriebwerk mit dem der Drehachse 5 unmittelbar benachbarten Endteil 4b des Wippenelementes 4 zur Herstellung des in den Lufteinlauf 2 strömenden Hauptluftstromes 6 und des Kühlluftstromes 9 für die Lufteinströmöffnung 8 zusammen. Bei ausgeschaltetem Hilfstriebwerk liegt das Endteil 4b des Wippenelements 4 zur Herstellung einer strömungsgünstigen Flugzeugoberfläche an der Flugzeugaußenhaut 1 an, wobei in Fig. 1 für diese Stellung das Wippenelement 4 gestrichelt dargestellt ist. In diesem Fall strömt die Luft unter dem Lufttrennblech 11 hindurch über die geschlossene Flugzeugaußenhaut 1. Es steht nur etwa die Hälfte der vorherigen Fläche im Luftstrom, was zu einer Veringerung des Luftwiderstandes führt.

Um Flüssigkeiten, die sich auf einer Flugzeugoberfläche befinden, abzuscheiden, ist zwischen der Flugzeugaußenhaut 1 und dem Lufttrennblech 11 ein Flüssigkeitsabscheider in Form eines Leitbleches 13 vorgesehen. Das Leitblech 13 ist senkrecht zum Lufttrennblech 11 angeordnet, ragt teilweise in den Kühlluftstrom 9 hinein und ist an der Flugzeugaußenhaut 1 befestigt. Wie aus Fig. 2 ersichtlich ist, kann das Leitblech 13 entgegengesetzt zur Strömungsrichtung der Kühlluft 9 keilförmig ausgebildet sein (vgl. gestrichelte Darstellung des Leitbleches 13).

### Bezugszeichenliste

- 1: Flugzeugaußenhaut
- 2: Lufteinlauf für Hilfstriebwerk
- 3: Ausnehmung in der Flugzeugaußenhaut 1
- 4: als Verschlußklappe dienendes mechanisches Wipperelement
- 4a: angewinkeltes Endteil des Wipperelement 4
- 4b: Endteil des Wipperelement 4, welches der Drehachse 5 benachbart ist
- 5: Drehachse des Wippenelements 4
- 6: Hauptluftstrom
- 7: Staunase des Lufteinlaufes 2
- 7a: Flugzeugwandung
- 8: Lufteinströmöffnung für Kühlluft 9
- 9: Kühlluft
- 10: Antriebsgestänge eines Verstellmotors
- 11: Lufttrennblech
- 12: Ende des Lufttrennblech 11, welches in Richtung der Öffnungen 2 und 8 zeigt
- 13: Leitblech als Flüssigkeitsabscheider
- 14: Anlenkpunkt des Antriebsgestänges 10

## Patentansprüche

1. Lufteinlauf-Vorrichtung für Hilfstriebwerke in Flugzeugen zur Versorgung von Hilfsgeräten, die in einer Flugzeugkammer angeordnet sind, wobei zur Einleitung von Kühlluft (9) eine Lufteinströmöffnung (8) in der Flugzeugaußenhaut (1) und ein Lufteinlauf (2) für einen Hauptluftstrom (6) vorgesehen sind und die Lufteinströmöffnung (8) und der Lufteinlauf (2) durch an der Flugzeugzelle beweglich gelagerte Elemente derart gesteuert werden, daß beide Öffnungen (2, 8) bei laufendem Hilfstriebwerk geöffnet und bei ausgeschaltetem Hilfstriebwerk verschlossen sind, **dadurch gekennzeichnet, daß** die Lufteinströmöffnung (8) und der Lufteinlauf (2) über ein mechanisches Wippenelement (4) mit einer unterhalb der Lufteinströmöffnung (8) angeordneten Drehachse (5) durch beiderseits angeordnete Endteile (4a, 4b) über einen Verstellmotor steuerbar sind und bei ausgeschaltetem Hilfstriebwerk das dem Lufteinlauf (2) benachbarte Endteil (4a) des Wippenelementes (4) den Lufteinlauf (2) sowie das der Drehachse (5) unmittelbar benachbarte andere Endteil (4b) des Wippenelementes (4) die Lufteinströmöffnung (8) verschließen und daß ein Lufttrennblech (11) außerhalb an der Flugzeugaußenhaut (1) in benachbarter Lage zu dem Lufteinlauf (2) und der Luftströmöffnung (8) befestigt ist und mit seinem in Richtung der Öffnungen (2, 8) zeigenden Ende (12) bei eingeschaltetem Hilfstriebwerk mit dem der Drehachse (5) unmittelbar benachbarten Endteil (4b) des Wippenelementes (4) zur Herstellung des in den Lufteinlauf (2) strömenden Hauptluftstromes (6) und des Kühlluftstromes (9) für die Lufteinströmöffnung (8) zusammenwirkt sowie bei ausgeschaltetem Hilfstriebwerk das Wippenelement (4) die Flugzeugaußenhaut (1) ergänzt.

2. Lufteinlauf-Vorrichtung nach Anspruch 1, **dadurch gekennzeichnet, daß** das Antriebsgestänge (10) des Verstellmotors in einem Bereich zwischen Drehachse (5) des Wippenelementes (4) und Staunase (7) des Lufteinlaufes (2) an dem Wippenelement (4) drehbeweglich befestigt ist.

3. Lufteinlauf-Vorrichtung nach Anspruch 1, **dadurch gekennzeichnet, daß** das Lufttrennblech (11) mittels mindestens einer aerodynamisch ausgeformten Stütze an der Flugzeugaußenhaut (1) mechanisch befestigt ist.

4. Lufteinlauf-Vorrichtung nach einem der Ansprüche 1 bis 3, **dadurch gekennzeichnet, daß** zwischen der Flugzeugaußenhaut (1) und dem Lufttrennblech (11) ein Flüssigkeitsabscheider in Form eines senkrecht zum Lufttrennblech (11) angeordneten, teilweise in den Kühlluftstrom (9) hineinragenden und an der Flugzeugaußenhaut (1) befestigten Leitbleches (13) angeordnet ist.

5. Lufteinlauf-Vorrichtung nach Anspruch 4, **dadurch gekennzeichnet, daß** das Leitblech (13) entgegengesetzt zur Strömungsrichtung der Kühlluft (9) keilförmig ausgebildet ist.

6. Lufteinlauf-Vorrichtung nach einem der Ansprüche 1 bis 5, **dadurch gekennzeichnet, daß** die Kühlluft (9) durch einen Kanal zu einem Anschluß geführt ist, von dem die Kühlluft (9) direkt in die Flugzeugkammer für das Hilfstriebwerk gelangt.

7. Lufteinlauf-Vorrichtung nach einem der Ansprüche 1 bis 5, **dadurch gekennzeichnet, daß** die Kühlluft (9) durch einen Kanal zu einem Anschluß geführt ist, von dem die Kühlluft (9) über ein Rohr in die Flugzeugkammer des Hilfstriebwerks gelangt.

## Claims

1. An air intake device for auxiliary power units in aircrafts for the supply of auxiliary devices arranged in a chamber of an aircraft, wherein for the inlet of cooling air (9) an air inflow opening (8) in the outer skin (1) of the aircraft and an air intake (2) for a main air flow (6) are provided, and the air inflow opening (8) and the air intake (2) are controlled by elements, which are movably supported on the fuselage, in such a manner that both openings (2, 8) are open when the auxiliary power unit is operating and are closed when the auxiliary power unit is switched off, **characterized in that** the air inflow opening (8) and the air intake (2) are controllable via a mechanical seesaw rocker element (4), having a rotation axis (5) disposed below the air inflow opening (8), by two end portions (4a, 4b) disposed on both sides via an adjustment motor, and when the auxiliary power unit is switched off the end portion (4a) of the seesaw rocker element (4) adjacent to the air intake (2) closes the air intake (2) and the other end portion (4b) of the seesaw rocker element (4) directly adjacent to the rotation axis (5) closes the air inflow opening (8), and that an air separation member (11) is secured on the outside on the outer skin (1) of the aircraft in an adjacent position with respect to the air intake (2) and the air inflow opening (8) and, when the auxiliary power unit is switched on, cooperates with its end (12) facing towards the openings (2, 8) with the end portion (4b) of the seesaw rocker element (4) directly adjacent to the rotation axis (5) for establishing the main air flow (6) flowing into the air intake (2) and the cooling air flow (9) for the air inflow opening (8), and the seesaw rocker element (4) supplements the outer skin (1) of the aircraft when the auxiliary power unit is switched off.

2. The air intake device according to claim 1, **characterized in that** the drive linkage (10) of the adjustment motor is rotatably secured to the seesaw rocker element (4) in a region between the rotation axis (5) of the seesaw rocker element (4) and a baffle element (7) of the air intake (2).

3. The air intake device according to claim 1, **characterized in that** the air separation member (11) is mechanically secured to the outer skin (1) of the aircraft by means of at least one support having an aerodynamic configuration.

4. The air intake device according to any of claims 1 to 3, **characterized in that** a liquid separator is disposed between the outer skin (1) of the aircraft and the air separation member (11), said liquid separator being provided in the form of a baffle plate (13) arranged perpendicularly to the air separation member (11), extending partially into the cooling air flow (9) and being secured to the outer skin (1) of the aircraft.

5. The air intake device according to claim 4, **characterized in that** the baffle plate (13) is configured being wedge-shaped opposite to the flow direction of the cooling air (9).

6. The air intake device according to any of claims 1 to 5, **characterized in that** the cooling air (9) is guided through a channel to a coupling, from which the cooling air (9) directly gets into the aircraft chamber for the auxiliary power unit.

7. The air intake device according to any of claims 1 to 5, **characterized in that** the cooling air (9) is guided through a channel to a coupling, from which the cooling air (9) gets into the aircraft chamber of the auxiliary power unit via a pipe.

## Revendications

1. Dispositif d'entrée d'air pour des unités de puissance auxiliaire dans des avions pour alimenter des appareils auxiliaires qui sont placés dans un compartiment d'avion, une ouverture d'afflux d'air (8) étant prévue pour l'introduction d'air de refroidissement (9) dans le bordé de l'avion (1) et une entrée d'air (2) étant prévue pour un flux d'air principal (6) et l'ouverture d'afflux d'air (8) et l'entrée d'air (2) étant commandées par des éléments positionnés mobiles sur la cellule de l'avion de telle manière que les deux ouvertures (2, 8) sont ouvertes lorsque l'unité de puissance auxiliaire est en marche et sont fermées lorsque l'unité de puissance auxiliaire est arrêtée, **caractérisé en ce que** l'ouverture d'afflux d'air (8) et l'entrée d'air (2) peuvent être commandées par l'intermédiaire d'un servomoteur par des pièces d'extrémité (4a, 4b) placées des deux côtés par l'intermédiaire d'un élément mécanique à bascule (4) avec un axe de rotation (5) placé au-dessous de l'ouverture d'afflux d'air (8) et que, lorsque l'unité de puissance auxiliaire est arrêtée, la pièce d'extrémité (4a) de l'élément à bascule (4) qui est voisine de l'entrée d'air (2) ainsi que l'autre pièce d'extrémité (4b) de l'élément à bascule (4) qui est directement voisine de l'axe de rotation (5) ferment l'ouverture d'afflux d'air (8) et qu'une tôle de séparation d'air (11) est fixée à l'extérieur sur le bordé de l'avion (1) dans une position voisine de l'entrée d'air (2) et de l'ouverture d'afflux d'air (8) et coopère avec son extrémité (12) qui est tournée en direction des ouvertures (2, 8), lorsque l'unité de puissance auxiliaire est en marche, avec la pièce d'extrémité (4b) de l'élément à bascule (4) qui est directement voisine de l'axe de rotation (5) pour constituer le flux d'air principal (6) qui afflue dans l'entrée d'air (2) et le flux d'air de refroidissement (9) pour l'ouverture d'afflux d'air (8) ainsi que l'élément à bascule (4) complète le bordé de l'avion (1) lorsque l'unité de puissance auxiliaire est arrêtée.

2. Dispositif d'entrée d'air selon la revendication 1, **caractérisé en ce que** le tringlage d'entraînement (10) du servomoteur est fixé mobile en rotation sur l'élément à bascule (4) dans une zone entre l'axe de rotation (5) de l'élément à bascule (4) et le nez d'accumulation (7) de l'entrée d'air (2).

3. Dispositif d'entrée d'air selon la revendication 1, **caractérisé en ce que** la tôle de séparation d'air (11) est fixée mécaniquement au bordé de l'avion (1) au moyen d'au moins un appui formé de manière aérodynamique.

4. Dispositif d'entrée d'air selon l'une des revendications 1 à 3, **caractérisé en ce qu'**un séparateur de liquide sous forme d'une chicane (13) placée perpendiculaire à la tôle de séparation d'air (11), pénétrant partiellement dans le flux d'air de refroidissement (9) et fixée au bordé de l'avion (1) est placé entre le bordé de l'avion (1) et la tôle de séparation d'air (11).

5. Dispositif d'entrée d'air selon la revendication 4, **caractérisé en ce que** la chicane (13) est configurée en clavette, opposée au sens d'afflux de l'air de refroidissement (9).

6. Dispositif d'entrée d'air selon l'une des revendications 1 à 5, **caractérisé en ce que** l'air de refroidissement (9) est guidé à travers un canal vers un raccord à partir duquel l'air de refroidissement (9) arrive directement dans le compartiment d'avion pour l'unité de puissance auxiliaire.

7. Dispositif d'entrée d'air selon l'une des revendications 1 à 5, **caractérisé en ce que** l'air de refroidissement (9) est guidé à travers un canal vers un raccord à partir duquel l'air de refroidissement (9) arrive par un tuyau au compartiment d'avion del'unité de puissance auxiliaire.
